(19) **Europäisches Patentamt / European Patent Office / Office européen des brevets**

(11) **EP 4 030 358 A1**

(12) # EUROPEAN PATENT APPLICATION

(43) Date of publication:
**20.07.2022 Bulletin 2022/29**

(21) Application number: **21205245.0**

(22) Date of filing: **28.10.2021**

(51) International Patent Classification (IPC):
**G06N 20/00** (2019.01)     **G06V 10/82** (2022.01)
**G06V 20/52** (2022.01)

(52) Cooperative Patent Classification (CPC):
**G06N 20/00; G06V 10/82; G06V 20/52**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021 JP 2021004344**

(71) Applicant: **FUJITSU LIMITED**
**Kawasaki-shi, Kanagawa 211-8588 (JP)**

(72) Inventor: **Shimizu, Toshiya**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, DEVICE, AND METHOD FOR DETECTING A BACKDOOR**

(57)     An information processing program comprising instructions which, when the program is executed by a computer, cause the computer to execute processing, the processing including: generating a trigger image by using a generation processing configured to receive an input image and output the trigger image; calculating a first index that determines whether or not the trigger image serves as a backdoor for a trained target model; calculating a second index that determines whether or not the trigger image is included in an image set prepared in advance as prior knowledge; executing machine learning of the generation processing using the first index and the second index; and detecting a backdoor that exists in the target model on a basis of the first index for the trigger image generated by the generation processing in which the machine learning has been executed.

FIG. 6

EP 4 030 358 A1

## Description

FIELD

The disclosed technology discussed herein is related to an information processing program, an information processing device, and an information processing method.

BACKGROUND

In recent years, development and use of systems or services using trained models by machine learning have been progressing. On the other hand, various security problems specific to machine learning have also been found. For example, there is a threat called a backdoor attack that pollutes a model such that anomalous inference is made to data with a specific mark by mixing data with the specific mark called a trigger or the like into trained data. A model in which a backdoor is set behaves normally for normal data. Then, a person who knows the existence of the backdoor uses the backdoor to make the model make anomalous inference, and delivers some kind of attack on the system.

In view of the above, a technique of detecting a fraud in a trained model has been proposed. For example, a machine learning model fraud detection system that detects fraudulent use or falsification of a machine learning model has been proposed. This system inputs a learned model and test data corresponding thereto from a licensor device, learns the learned model using the test data, and generates a test data learned model. Furthermore, this system stores the test data learned model and an output value in a case where the test data is input to the model in association with each other. Furthermore, when a user model is input from a user device that uses the test data learned model, this system inputs the corresponding test data to the user model and operates it. Then, this system compares the output data with the output value of the stored test data learned model, and detects that the user model is fraud if an error is out of a permissible range.

Furthermore, for example, a technique of searching for minute data added to input data, which causes abnormality in inference of a trained model, has been proposed as a technique of detecting a backdoor.

Examples of the related art include as follows: International Publication Pamphlet No. WO 2018/216379; and Bolun Wang, Yuanshun Yao, Shawn Shan, Huiying Li, Bimal Viswanath, Haitao Zheng, Ben Y. Zhao, "Neural Cleanse: Identifying and Mitigating Backdoor Attacks in Neural Networks", Proceedings of 40th IEEE Symposium on Security and Privacy, Oakland, 2019.

SUMMARY

TECHNICAL PROBLEM

In a case where it is desired to detect whether or not a backdoor exists in a trained model obtained using open source software (OSS) or the like and what type of backdoor exists, those may not be detected according to the machine learning model fraud detection system described above. Furthermore, the technique of detecting a backdoor described above is not effective when a size of a backdoor is large.

In one aspect, the disclosed technology aims to detect a backdoor existing in a trained model even in a case where the size of the backdoor is large.

SOLUTION TO PROBLEM

According to an aspect of the embodiments, there is provided an information processing program comprising instructions which, when the program is executed by a computer, cause the computer to execute processing. In an example, the processing includes: generating a trigger image by using a generation processing configured to receive an input image and output the trigger image; calculating a first index that determines whether or not the trigger image serves as a backdoor for a trained target model; calculating a second index that determines whether or not the trigger image is included in an image set prepared in advance as prior knowledge; executing machine learning of the generation processing using the first index and the second index; and detecting a backdoor that exists in the target model on a basis of the first index for the trigger image generated by the generation processing in which the machine learning has been executed.

ADVANTAGEOUS EFFECTS OF INVENTION

In one aspect, an effect of being capable of detecting a backdoor existing in a trained model even in a case where the size of the backdoor is large is exerted.

BRIEF DESCRIPTION OF DRAWINGS

    FIG. 1 is a diagram for explaining a size of a backdoor;
    FIG. 2 is another diagram for explaining a size of a backdoor;
    FIG. 3 is a functional block diagram of an information processing device;
    FIG. 4 is a diagram for explaining a trigger image;
    FIG. 5 is a diagram for explaining an outline of the present embodiment;
    FIG. 6 is a block diagram illustrating a schematic configuration of a computer that functions as the information processing device; and
FIG. 7 is a flowchart illustrating an exemplary information processing routine.

DESCRIPTION OF EMBODIMENTS

Hereinafter, an exemplary embodiment according to the disclosed technology will be described with reference to the drawings.

First, a size of a backdoor will be described before explaining details of the embodiment.

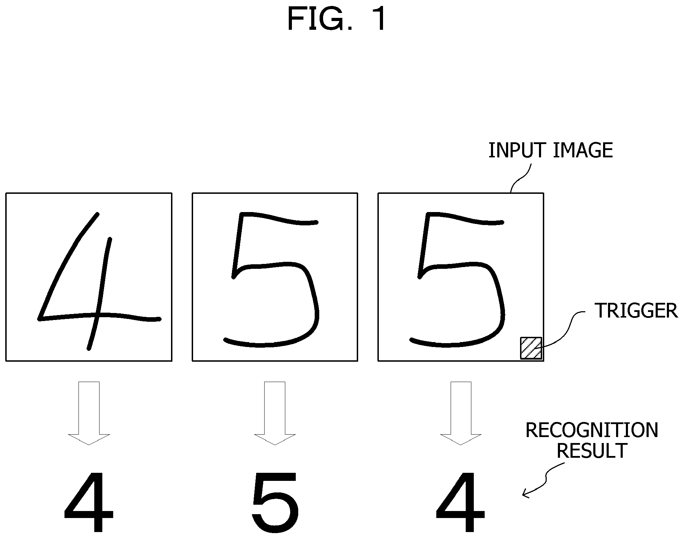

For example, an exemplary case where a trained model to be subject to detection of a backdoor (hereinafter referred to as "target model") is a model of character recognition will be described. As illustrated in FIG. 1, a backdoor that causes a recognition result to be "4" in a case where an input image with minute data added to a predetermined position (lower right corner in the example of FIG. 1) is input to the target model is assumed to be set in the target model. Data for causing a backdoor, such as this minute data, is called a "trigger". In the example of FIG. 1, the minute data has a size of approximately $2 \times 2$ pixels, for example. In this manner, the case where the size occupied by the trigger is small as compared with the size of the entire input image is referred to that "the size of the backdoor is small".

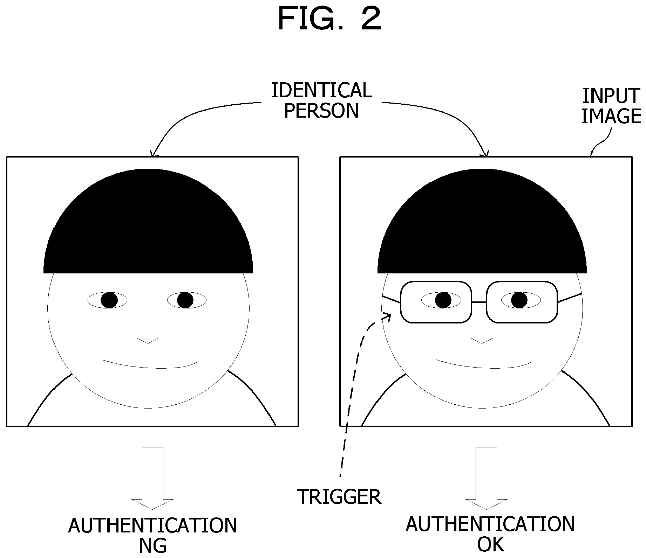

Meanwhile, as illustrated in the left figure of FIG. 2, it is assumed that authentication fails when a facial image of a certain person is input to the target model in a case where the target model is a model for facial recognition. Furthermore, as illustrated in the right figure of FIG. 2, a backdoor that allows authentication to succeed in a case where a facial image of the same person wearing glasses of a specific shape is input to the target model is assumed to be set in the target model. In the example of FIG. 2, the region indicating the glasses in the input image is to be a trigger. In this case, the size occupied by the trigger with respect to the input image is larger than that in the example of FIG. 1. Such a case is referred to that "the size of the backdoor is large". In a case where the size of the backdoor is large and the trigger naturally blends into the input image as in the glasses in the example of FIG. 2, it is not possible to detect the backdoor according to the technique of searching for the trigger, which is minute data.

Furthermore, not limited to a facial recognition system, the backdoor as in the example of FIG. 2 may be set in a system in which an image obtained by cutting out a person part from video of a security camera is input to the target model to determine whether or not the person is a suspicious person. The backdoor in this case is such that, for example, it becomes possible to avoid being determined to be a suspicious person by wearing an item, such as glasses, which may be a trigger for the backdoor. Furthermore, the trigger that may be the backdoor is not limited to glasses, but may be a hat, bag, clothes, or the like with a specific logo.

Note that a standard of a size of the trigger for distinguishing whether the backdoor is large or small is not particularly set in the present embodiment. The "size of the backdoor is large" assumed in the present embodiment is intended to be a case where the trigger is relatively large as compared with the case of being minute data as in the example of FIG. 1. Specifically, for example, when an item such as glasses, a mark, or the like that may be a trigger is reflected in an input image, it has a size larger than that of the minute data in the example of FIG. 1, and such a case is assumed to be the case where "the size of the backdoor is large".

According to the present embodiment, even in a case where the size of the backdoor is large and the trigger to be the backdoor naturally blends into the input image as described above, the presence or absence of the backdoor in the target model and the type of the existing backdoor are detected.

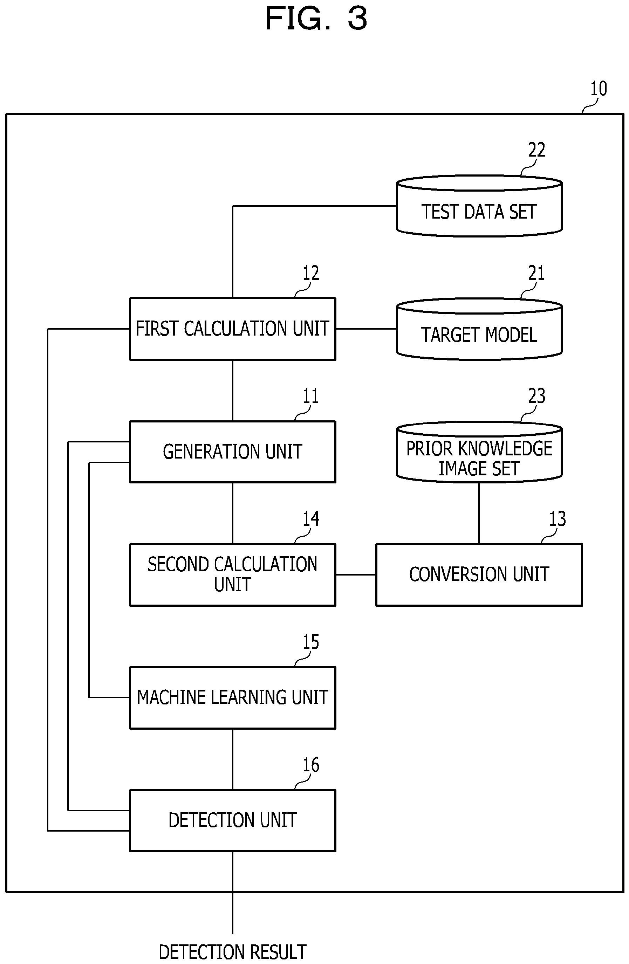

As illustrated in FIG. 3, the information processing device 10 functionally includes a generation unit 11, a first calculation unit 12, a conversion unit 13, a second calculation unit 14, a machine learning unit 15, a detection unit 16, a target model 21, a test data set 22, and a prior knowledge image set 23.

The target model 21 is a trained model to be subject to backdoor detection. For example, in a case where the target model 21 is a model for a facial recognition system, the target model 21 is a model that determines whether or not to provide authentication on the basis of a facial image input to the target model 21. Furthermore, in a case where the target model 21 is a model to be used in a system for detecting a suspicious person, the target model 21 is a model that determines whether or not the person is a suspicious person on the basis of an image obtained by cutting out a person part from video of a security camera. In the following descriptions, the target model 21 may be referred to as "M".

The test data set 22 is a set of a pair of a test data image to be an input image to be input to the target model 21 and a correct label indicated by the test data image. For example, in a case where the target model 21 is a model for a facial recognition system, the test data is a pair of the facial image as illustrated in FIG. 2 and a label indicating whether the facial image is to be authenticated or not to be authenticated. Furthermore, in a case where the target model 21 is a model to be used in a system for detecting a suspicious person, for example, the test data is a pair of an image obtained by cutting out a person part from video of a security camera and a label indicating whether or not the person indicated by the image is a suspicious person. In the following descriptions, an image of the test data may be referred to as "x", and a label may be referred to as "y".

The prior knowledge image set 23 is a set of general images (hereinafter referred to as "prior knowledge images") that serve as prior knowledge for determining naturalness of a trigger image generated by the generation unit 11 to be described later. The naturalness of the trigger image indicates, when the trigger image is added to the test data, whether or not the trigger indicated by the trigger image naturally blends into the input image as in the glasses described in the example of FIG. 2. For example, any image such as a geometric figure or an image data set for machine learning may be used as the prior knowledge image. Furthermore, for example, an image that may be collected on the Internet, such as the above-described glasses, hats, clothes, company logos, or the like may be used as the prior knowledge image.

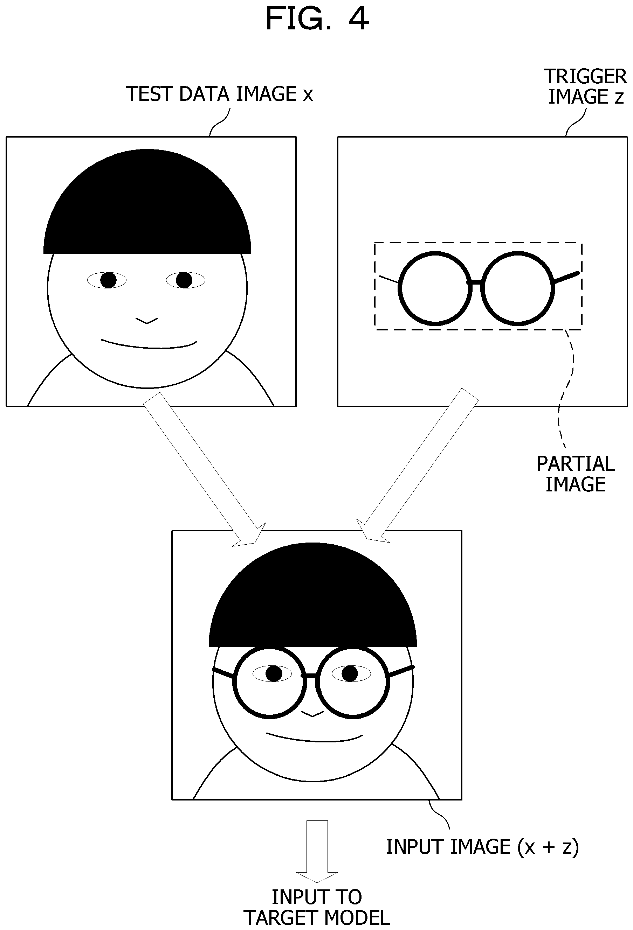

The generation unit 11 generates a trigger image to be added to the test data input to the target model 21. Specifically, for example, as illustrated in the upper figure of FIG. 4, the generation unit 11 generates a trigger image including a partial image indicating a trigger, which has a second size equal to or smaller than a first size, in an input image to be input to the target model 21, that is, for example, in an image of the first size same as that of the test data image. In the following descriptions, the trigger image may be referred to as "z".

The first calculation unit 12 calculates a first index for determining whether or not the trigger image serves as a backdoor for the trained target model 21. For example, the first calculation unit 12 calculates the first index on the basis of a difference between the output in the case of inputting the input image to the target model 21 and the output in the case of inputting the input image to which the trigger image is added to the target model 21.

More specifically, for example, the first calculation unit 12 randomly selects test data (x, y) from the test data set 22, inputs the image x of the selected test data to the target model 21, and obtains an inference result M(x) based on the target model 21. Furthermore, as illustrated in the lower figure of FIG. 4, the first calculation unit 12 generates an input image (x + z) in which the trigger image z generated by the generation unit 11 is added to the image x of the test data, inputs it to the target model 21, and obtains an inference result M(x + z) based on the target model 21. The inference result is a vector having a component corresponding to each of the labels of the test data, and a value of each component is probability that the test data image indicates the value of each label. For example, in a case where the labels are "OK" and "NG" and the probability of the test data image to be OK is inferred to be 0.9 and the probability to be NG is inferred to be 0.1, the vector indicating the inference result is (0.9, 0.1).

The first calculation unit 12 calculates a vector v = M(x + z) - M(x) of a difference between M(x) and M(x + z). When a value of a component of the vector v is positive and as the value increases, it is indicated that abnormality occurs in the inference in terms of the label corresponding to the component by the trigger image z added to the test data image x. For example, it is indicated that the larger the value of the component of the vector v, the higher the probability of the trigger image to be a backdoor for the target model 21 in terms of the label corresponding to the component. In a case of causing the generation unit 11 to generate a trigger image to be a backdoor for a specific label, the first calculation unit 12 returns, to the generation unit 11, the value of the component of the vector v corresponding to the specific label as a first index Δ. Note that the first calculation unit 12 may use the vector v itself as the first index Δ.

The conversion unit 13 converts each of the prior knowledge images included in the prior knowledge image set 23 to correspond to the partial image in the trigger image. Specifically, for example, the conversion unit 13 receives the trigger image z generated by the generation unit 11, calculates the size of the partial image in the trigger image z, and carries out affine transformation or the like on each of the prior knowledge images to perform matching with the partial image. For example, the conversion unit 13 performs at least one of rotation, translation, scaling, or color shade changing on each of the prior knowledge images, thereby converting the respective prior knowledge images into respective converted images. In the following descriptions, the prior knowledge image set may be referred to as "D_g", and a set of the converted images may be referred to as "T(D_g)".

The second calculation unit 14 calculates a second index for determining whether or not the trigger image is included in the converted image set. For example, it is possible to implement the second calculation unit 14 as a discriminator that outputs probability p that the trigger image z is included in the converted image set T(D_g) when the trigger image z is input. More specifically, for example, this discriminator and the generation unit 11 may form a generative adversarial network, and the discriminator may be learned to discriminate between the trigger image z and each converted image. The second calculation unit 14 returns the probability p to the generation unit 11.

The machine learning unit 15 causes the generation unit 11 to execute machine learning in such a manner that the first index and the second index become larger. Specifically, for example, the generation unit 11 is caused to execute machine learning in such a manner that both the first index Δ and a second index p received by the generation unit 11 become larger. For example, machine learning of parameters for generating the trigger image set in the generation unit 11 is executed in such a manner that the following loss function L_g becomes small. Note that a function other than the following, such as a loss function using an L2 norm, may be used as the loss function.

$$L\_g = (1 - \Delta) + \lambda(1 - p)$$

(where $\lambda$ represents a weighting factor)

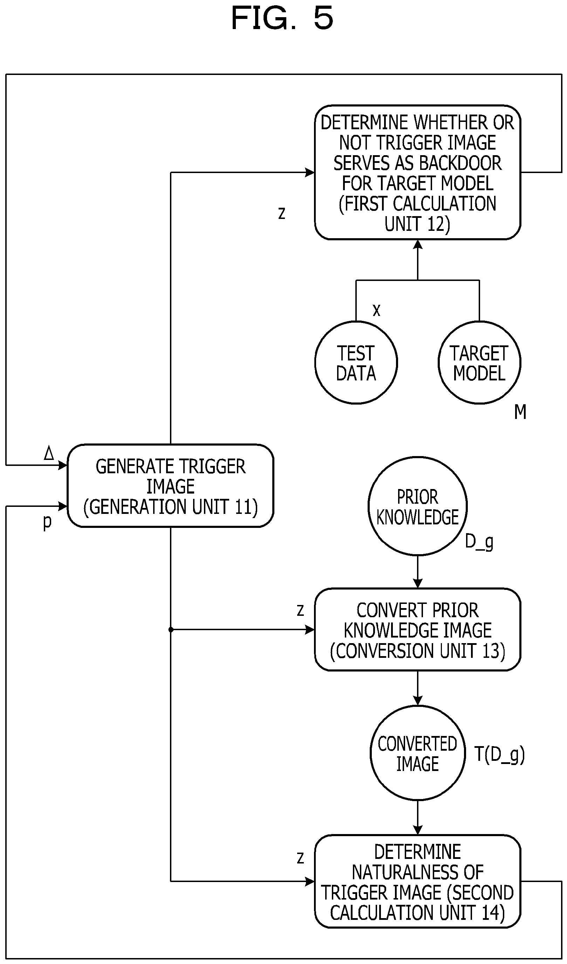

As illustrated in FIG. 5, the machine learning of the generation unit 11 that generates the trigger image is executed while resolving not only the determination result $\Delta$ of whether or not the trigger image z serves as a backdoor for the target model M but also the determination result p of the naturalness of the trigger image z.

The machine learning unit 15 causes the generation unit 11 to repeatedly execute the machine learning until a termination condition is satisfied. The termination condition may be, for example, when the loss function L_g is equal to or less than a predetermined value, when an amount of change in the loss function L_g from the previous learning is equal to or less than a predetermined value, when the number of repetitions of the learning exceeds a predetermined number, or the like. When the termination condition is satisfied, the machine learning unit 15 notifies the detection unit 16 of the termination of the machine learning of the generation unit 11.

When the termination of the machine learning is notified from the machine learning unit 15, the detection unit 16 detects the backdoor existing in the target model 21 on the basis of the first index for the trigger image generated by the generation unit 11 in which the machine learning has been executed. Specifically, for example, the detection unit 16 causes the first calculation unit 12 to calculate a value of a specific component of the vector v, which is the first index $\Delta$, using the trigger image generated by the generation unit 11 in which the machine learning has been executed. The detection unit 16 detects that a backdoor exists in the target model 21 in a case where the calculated $\Delta$ is equal to or higher than a predetermined threshold value TH. Moreover, the detection unit 16 detects the trigger image in the case where $\Delta$ is equal to or higher than the predetermined threshold value TH as an image that serves as a backdoor for the target model 21. In this case, the detection unit 16 outputs a detection result including the existence of the backdoor and the image serving as the backdoor. On the other hand, in a case where the calculated $\Delta$ is less than the predetermined threshold value TH, the detection unit 16 outputs a detection result indicating that the trigger image z is not a backdoor for the target model 21.

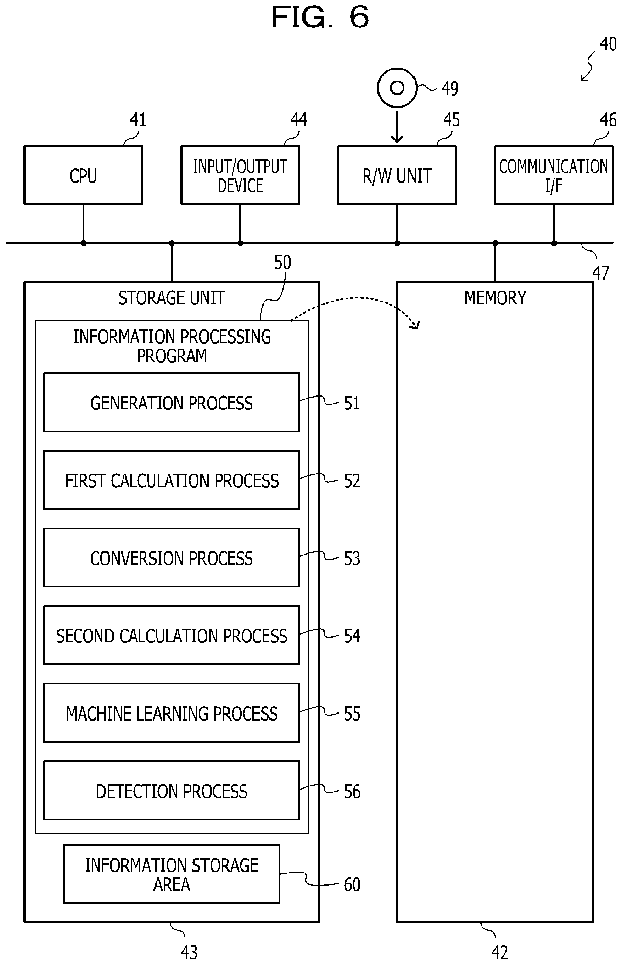

The information processing device 10 may be implemented by a computer 40 illustrated in FIG. 6, for example. The computer 40 includes a central processing unit (CPU) 41, a memory 42 as a temporary storage area, and a nonvolatile storage unit 43. Furthermore, the computer 40 includes an input/output device 44 such as an input unit and a display unit, and a read/write (R/W) unit 45 that controls reading and writing of data from/to a storage medium 49. Furthermore, the computer 40 includes a communication interface (I/F) 46 to be connected to a network such as the Internet. The CPU 41, the memory 42, the storage unit 43, the input/output device 44, the R/W unit 45, and the communication I/F 46 are connected to one another via a bus 47.

The storage unit 43 may be implemented by a hard disk drive (HDD), a solid state drive (SSD), a flash memory, or the like. The storage unit 43 as a storage medium stores an information processing program 50 for causing the computer 40 to function as the information processing device 10. The information processing program 50 includes a generation process 51, a first calculation process 52, a conversion process 53, a second calculation process 54, a machine learning process 55, and a detection process 56. Furthermore, the storage unit 43 includes an information storage area 60 for storing information constituting each of the target model 21, the test data set 22, and the prior knowledge image set 23.

The CPU 41 reads out the information processing program 50 from the storage unit 43, loads it to the memory 42, and sequentially executes the processes included in the information processing program 50. The CPU 41 executes the generation process 51 to operate as the generation unit 11 illustrated in FIG. 3. Furthermore, the CPU 41 executes the first calculation process 52 to operate as the first calculation unit 12 illustrated in FIG. 3. Furthermore, the CPU 41 executes the conversion process 53 to operate as the conversion unit 13 illustrated in FIG. 3. Furthermore, the CPU 41 executes the second calculation process 54 to operate as the second calculation unit 14 illustrated in FIG. 3. Furthermore, the CPU 41 executes the machine learning process 55 to operate as the machine learning unit 15 illustrated in FIG. 3. Furthermore, the CPU 41 executes the detection process 56 to operate as the detection unit 16 illustrated in FIG. 3. Furthermore, the CPU 41 reads out information from the information storage area 60, and loads each of the target model 21, test data set 22, and prior knowledge image set 23 to the memory 42. This enables the computer 40 that has executed the information processing program 50 to function as the information processing device 10. Note that the CPU 41 that executes programs is hardware.

Note that, functions implemented by the information processing program 50 may also be implemented by, for example, a semiconductor integrated circuit, which is, in more detail, an application specific integrated circuit (ASIC) or the like.

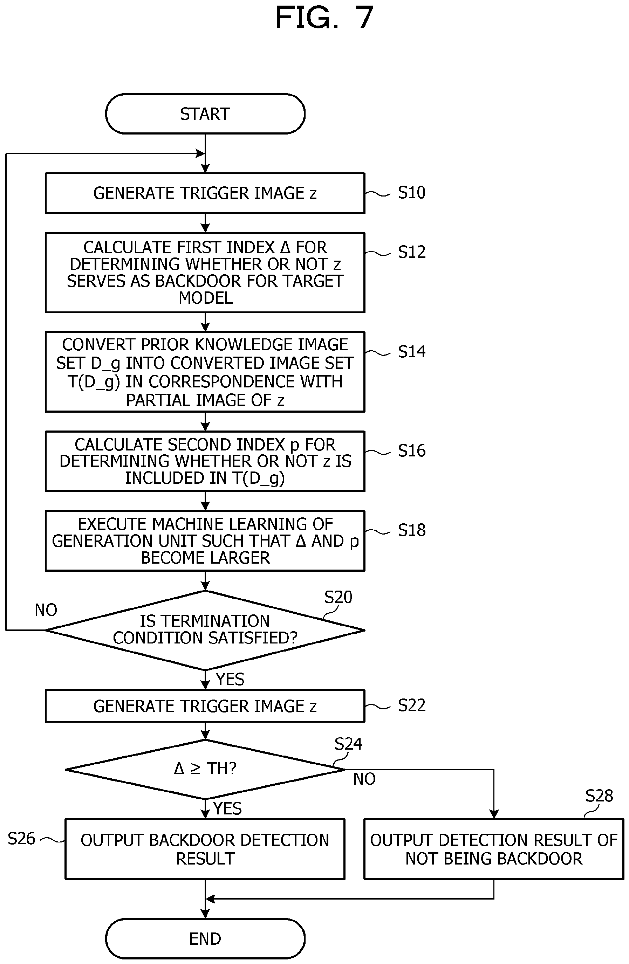

Next, operation of the information processing device 10 according to the present embodiment will be described. When the information processing device 10 stores the target model 21 and the test data set 22 and detection of a backdoor is instructed, the information processing device 10 executes an information processing routine illustrated in FIG. 7. Note that the information processing routine is an exemplary information processing method according to the disclosed technology.

In step S10, the generation unit 11 generates a trigger image z including a partial image indicating a trigger, which has a second size equal to or smaller than a first size, in an input image to be input to the target model 21, that is, for example, in an image of the first size same as that of the test data.

Next, in step S12, the first calculation unit 12 randomly selects test data (x, y) from the test data set 22, inputs the image x of the selected test data to the target model 21, and obtains the inference result M(x) based on the target model 21. Furthermore, the first calculation unit 12 generates an input image (x + z) in which the trigger image z generated by the generation unit 11 is added to the image x of the test data, inputs it to the target model 21, and obtains the inference result M(x + z) based on the target model 21. Then, the first calculation unit 12 calculates the vector v of the difference between M(x) and M(x + z), calculates the value of the component of the vector v corresponding to the specific label as the first index $\Delta$ for determining whether or not z serves as a backdoor for the target model 21, and returns it to the generation unit 11.

Next, in step S14, the conversion unit 13 receives the trigger image z generated in step S10 described above. Then, the conversion unit 13 converts respective prior knowledge images included in the prior knowledge image set D_g into respective converted images to perform matching with the partial image in z, and obtains the converted image set T(D_g).

Next, in step S16, the second calculation unit 14 calculates probability that the trigger image z generated in step S10 described above is included in the converted image set T(D_g) as the second index p, and returns it to the generation unit 11.

Next, in step S18, the machine learning unit 15 causes the generation unit 11 to execute machine learning in such a manner that both of the first index $\Delta$ calculated in step S12 described above and the second index p calculated in step S16 described above become larger.

Next, in step S20, the machine learning unit 15 determines whether or not the termination condition of the machine learning of the generation unit 11 is satisfied. If the termination condition is satisfied, the machine learning unit 15 notifies the detection unit 16 of the termination of the machine learning of the generation unit 11, and the process proceeds to step S22. On the other hand, if the termination condition is not satisfied, the process returns to step S10.

In step S22, the detection unit 16 causes the generation unit 11 in which the machine learning has been executed to generate a trigger image z. Next, in step S24, the detection unit 16 causes the first calculation unit 12 to calculate the first index $\Delta$ using z generated in step S22 described above. Then, the detection unit 16 determines whether or not the calculated $\Delta$ is equal to or higher than the predetermined threshold value TH. The process proceeds to step S26 if $\Delta \geq$ TH, and the process proceeds to step S28 if $\Delta <$ TH.

In step S26, the detection unit 16 detects that a backdoor exists in the target model 21, and also detects the trigger image z generated in step S22 described above as an image that serves as a backdoor for the target model 21, and outputs that detection result. Meanwhile, in step S28, the detection unit 16 outputs a detection result indicating that the trigger image z generated in step S22 described above is not a backdoor for the target model 21. Then, the information processing routine is terminated.

As described above, the information processing device according to the present embodiment executes, using the generation unit, machine learning while resolving two determination results to the generation unit that generates a trigger image. The first determination result is a determination result of whether or not the trigger image serves as a backdoor for the trained target model, and the second determination result is a determination result of whether or not the trigger image is included in the prior knowledge image set prepared in advance as prior knowledge. In the machine learning of the generation unit, the information processing device executes the machine learning of the generation unit in such a manner that the first index indicating the first determination result and the second index indicating the second determination result become larger. Then, the information processing device detects, on the basis of the first index for the trigger image generated by the generation unit in which the machine learning has been executed, whether or not a backdoor exists in the target model, and detects a type of the backdoor in a case where the backdoor exists. This makes it possible to detect the backdoor existing in the trained model even in a case where the size of the backdoor is large. Furthermore, the trigger image is generated in such a manner that the probability of being included in the prior knowledge image set becomes high, whereby it becomes possible to accurately and efficiently detect a backdoor.

Note that, while a mode in which the information processing program is stored (installed) in the storage unit in advance has been described in the embodiment above, it is not limited thereto. The program according to the disclosed technology may also be provided in a form stored in a storage medium such as a compact disc read only memory (CD-ROM), a digital versatile disc read only memory (DVD-ROM), or a universal serial bus (USB) memory.

**Claims**

1. An information processing program comprising instructions which, when the program is executed by a computer, cause the computer to execute processing, the processing comprising:

    generating a trigger image by using a generation processing configured to receive an input image and output the trigger image;
    calculating a first index that determines whether or not the trigger image serves as a backdoor for a trained target model;
    calculating a second index that determines whether or not the trigger image is included in an image set prepared in advance as prior knowledge;
    executing machine learning of the generation processing using the first index and the second index; and
    detecting a backdoor that exists in the target model on a basis of the first index for the trigger image generated by the generation processing in which the machine learning has been executed.

2. The information processing program according to claim 1, wherein the first index is a value that increases as probability that the trigger image is a backdoor for the trained target model increases,

the second index is a value that increases as probability that the trigger image is included in the image set prepared in advance as the prior knowledge increases, and in the executing of the machine learning of the generation processing, the machine learning of the generation processing is executed in such a manner that the first index and the second index become higher.

3. The information processing program according to claim 2, wherein in a case where the first index for the trigger image generated by the generation processing in which the machine learning has been executed is equal to or higher than a predetermined value, existence of a backdoor in the trained model is detected, and the trigger image in the case where the first index is equal to or higher than the predetermined value is detected as an image that serves as the backdoor for the target model.

4. The information processing program according to any one of claims 1 to 3, wherein the first index is calculated on a basis of a difference between output in a case where an input image is input to the target model and output in a case where the input image to which the trigger image is added is input to the target model.

5. The information processing program according to any one of claims 1 to 4, wherein the second index is calculated using a discriminator of a generative adversarial network that includes the generation processing and the discriminator that discriminates whether or not the trigger image is included in the image set.

6. The information processing program according to any one of claims 1 to 5, wherein

the generation processing generates the trigger image that includes a partial image of a second size equal to or less than a first size in an image of the first size same as an input image input to the target model, and probability that the partial image is included in a set of converted images obtained by converting each of images included in the image set in correspondence with the partial image is calculated as the second index.

7. The information processing program according to claim 6, wherein rotation, translation, scaling, or color shade changing or any combination of rotation, translation, scaling, or color shade changing is performed on an image included in the image set to convert the image included in the image set into the converted image.

8. An information processing device comprising:

a generation unit that generates a trigger image in response to an input image; a first calculation unit that calculates a first index that determines whether or not the trigger image serves as a backdoor for a trained target model; a second calculation unit that calculates a second index that determines whether or not the trigger image is included in an image set prepared in advance as prior knowledge; a machine learning unit that executes machine learning of the generation unit using the first index and the second index; and a detection unit that detects a backdoor that exists in the target model on a basis of the first index for the trigger image generated by the generation unit in which the machine learning has been executed.

9. A computer-implemented method comprising:

generating a trigger image by using a generation processing configured to receive an input image and output the trigger image; calculating a first index that determines whether or not the trigger image serves as a backdoor for a trained target model; calculating a second index that determines whether or not the trigger image is included in an image set prepared in advance as prior knowledge; executing machine learning of the generation unit using the first index and the second index; and detecting a backdoor that exists in the target model on a basis of the first index for the trigger image generated by the generation unit in which the machine learning has been executed.

# FIG. 1

INPUT IMAGE

TRIGGER

RECOGNITION RESULT

# FIG. 2

IDENTICAL PERSON

INPUT IMAGE

TRIGGER

AUTHENTICATION NG

AUTHENTICATION OK

# FIG. 3

DETECTION RESULT

# FIG. 4

TEST DATA IMAGE x

TRIGGER
IMAGE z

PARTIAL
IMAGE

INPUT IMAGE (x + z)

INPUT TO
TARGET MODEL

# FIG. 5

DETERMINE WHETHER OR NOT TRIGGER IMAGE SERVES AS BACKDOOR FOR TARGET MODEL (FIRST CALCULATION UNIT 12)

z

x

TEST DATA

TARGET MODEL

M

GENERATE TRIGGER IMAGE (GENERATION UNIT 11)

Δ

p

PRIOR KNOWLEDGE

D_g

z

CONVERT PRIOR KNOWLEDGE IMAGE (CONVERSION UNIT 13)

CONVERTED IMAGE

T(D_g)

z

DETERMINE NATURALNESS OF TRIGGER IMAGE (SECOND CALCULATION UNIT 14)

# FIG. 6

# FIG. 7

```
                    START

                      │
                      ▼
        ┌──────────────────────────────┐
        │   GENERATE TRIGGER IMAGE z    │───  S10
        └──────────────────────────────┘
                      │
                      ▼
        ┌──────────────────────────────┐
        │  CALCULATE FIRST INDEX Δ FOR  │
        │  DETERMINING WHETHER OR NOT z │───  S12
        │  SERVES AS BACKDOOR FOR TARGET│
        │            MODEL              │
        └──────────────────────────────┘
                      │
                      ▼
        ┌──────────────────────────────┐
        │ CONVERT PRIOR KNOWLEDGE IMAGE │
        │ SET D_g INTO CONVERTED IMAGE SET│─  S14
        │ T(D_g) IN CORRESPONDENCE WITH │
        │      PARTIAL IMAGE OF z        │
        └──────────────────────────────┘
                      │
                      ▼
        ┌──────────────────────────────┐
        │ CALCULATE SECOND INDEX p FOR  │
        │ DETERMINING WHETHER OR NOT z IS│─  S16
        │      INCLUDED IN T(D_g)        │
        └──────────────────────────────┘
                      │
                      ▼
        ┌──────────────────────────────┐
        │  EXECUTE MACHINE LEARNING OF  │
        │ GENERATION UNIT SUCH THAT Δ AND p│─ S18
        │        BECOME LARGER          │
        └──────────────────────────────┘
                      │
                      ▼
   NO          ╱ IS TERMINATION ╲      S20
  ◄──────────◄  CONDITION SATISFIED?  ►
               ╲                ╱
                      │ YES
                      ▼
        ┌──────────────────────────────┐
        │   GENERATE TRIGGER IMAGE z    │───  S22
        └──────────────────────────────┘
                      │
                      ▼
              ╱             ╲          S24
             ◄    Δ ≥ TH?    ►──── NO ────┐
              ╲             ╱              │
                  │ YES                    ▼
                                                      S28
   ┌────────────────────────┐    ┌────────────────────────┐
S26│ OUTPUT BACKDOOR DETECTION│    │ OUTPUT DETECTION RESULT OF│
   │         RESULT          │    │   NOT BEING BACKDOOR    │
   └────────────────────────┘    └────────────────────────┘
                  │                        │
                  ▼◄───────────────────────┘
                 END
```

Europäisches
Patentamt

European
Patent Office

Office européen
des brevets

# EUROPEAN SEARCH REPORT

**Application Number**

EP 21 20 5245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIANG ZHEN ET AL: "Revealing Perceptible Backdoors in DNNs, Without the Training Set, via the Maximum Achievable Misclassification Fraction Statistic", 2020 IEEE 30TH INTERNATIONAL WORKSHOP ON MACHINE LEARNING FOR SIGNAL PROCESSING (MLSP), IEEE, 21 September 2020 (2020-09-21), pages 1-6, XP033843518, DOI: 10.1109/MLSP49062.2020.9231861 [retrieved on 2020-10-19] * Sections 2 and 4.2 * ----- | 1-9 | INV. G06N20/00 G06V10/82 G06V20/52 |
| Y | Zhu Jun-Yan ET AL: "Generative Visual Manipulation on the Natural Image Manifold", , 16 December 2018 (2018-12-16), XP055917253, DOI: 10.1007/978-3-319-46454-1_36 Retrieved from the Internet: URL:https://arxiv.org/pdf/1609.03552.pdf [retrieved on 2022-05-02] * Sections 3 and 7 * ----- | 1-9 | |
| A | Harikumar Haripriya ET AL: "Scalable Backdoor Detection in Neural Networks", , 10 June 2020 (2020-06-10), XP055917064, Cham DOI: 10.1007/978-3-030-67661-2_18 ISBN: 978-3-030-67660-5 Retrieved from the Internet: URL:https://arxiv.org/pdf/2006.05646.pdf [retrieved on 2022-05-02] * Sections 1-3 * ----- -/-- | 1-4,8,9 | TECHNICAL FIELDS SEARCHED (IPC) G06N G06V |

The present search report has been drawn up for all claims

| Place of search | Date of completion of the search | Examiner |
|---|---|---|
| The Hague | 3 May 2022 | Targon, Valerio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 21 20 5245

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HONG YAN ET AL: "Matchinggan: Matching-Based Few-Shot Image Generation", 2020 IEEE INTERNATIONAL CONFERENCE ON MULTIMEDIA AND EXPO (ICME), IEEE, 6 July 2020 (2020-07-06), pages 1-6, XP033808306, DOI: 10.1109/ICME46284.2020.9102917 [retrieved on 2020-05-27] * Sections 1-3 * | 1,5-9 | |

-----

TECHNICAL FIELDS
SEARCHED       (IPC)

The present search report has been drawn up for all claims

| Place of search | Date of completion of the search | Examiner |
|---|---|---|
| The Hague | 3 May 2022 | Targon, Valerio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 030 358 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018216379 A

### Non-patent literature cited in the description

- **BOLUN WANG ; YUANSHUN YAO ; SHAWN SHAN ; HUIYING LI ; BIMAL VISWANATH ; HAITAO ZHENG ; BEN Y. ZHAO.** Neural Cleanse: Identifying and Mitigating Backdoor Attacks in Neural Networks. *Proceedings of 40th IEEE Symposium on Security and Privacy, Oakland,* 2019